# EUROPEAN PATENT SPECIFICATION

(11) **EP 2 256 265 B1**
(45) Date of publication and mention of the grant of the patent: **24.04.2013**
(21) Application number: 10005385.9
(22) Date of filing: 24.05.2010
(51) Int. Cl.: E04C 2/292, B32B 13/04, B32B 15/10

(54) **Insulated multilayer sandwich panel**
Isolierte mehrschichtige Sandwichplatte
Panneau en sandwich multicouche isolé

(30) Priority: 22.05.2009 IT BG20090012 U; 22.05.2009 IT BG20090013 U
(43) Date of publication of application: 01.12.2010
(73) Proprietor: Silvestri & associati-Studio Tecnico, 24044 Dalmine (BG) (IT)
(72) Inventor: Silvestri, Massimo, 24060 Carobbio degli Angeli (BG) (IT)
(74) Representative: Gatti, Enrico

(56) References cited:
- EP-A2- 0 431 574
- DE-U1-202007 009 532
- GB-A- 2 306 389

## Description

The present invention relates to a multilayer sandwich panel insulated with wood fibre.

Sandwich panels are commercially available consisting usually of two metal sheets (of galvanized and painted steel, stainless steel, aluminium alloy, etc.) between which an insulating material is placed. The insulation normally consists of a single homogeneous layer of injected and expanded polyurethane (PUR), or sintered expanded polystyrene (EPS) (including in the version filled with graphite) or of expanded and extruded type (XPS), or high density orientated fibre mineral wool (MW). Each of these insulations presents advantages and disadvantages. The main common disadvantage is the modest overall bulk thermal capacity.

Current legal requirements on energy performance for housings relative to the Lombardy Region of Italy (Regional Council Decree No. 8745 of 22 December 2008, point 5.4, paragraph b) require a periodic thermal transmittance modulus value YIE for walls which is less than 0.12 W/m² K, for all localities in which the mean irradiation value in the horizontal plane in the month of maximum summer sunshine is greater than or equal to 290 W/m², excluding climatic zone F. For horizontal and inclined opaque structures YIE must be less than 0.20 W/m² K.

With the aforedescribed sandwich panels with a single insulating layer, these conditions are not verified. To satisfy them, further coverings are required on the external side of the panel (for example ventilated facades), or on the internal side (for example plasterboard backing walls). If not required for other reasons (functional or aesthetic), these constructional elements involve additional costs.

Moreover, the aforedescribed sandwich panels with a single insulating layer have a reduced acoustic behaviour (expressed in terms of their sound insulating power Rw) which is generally insufficient to alone satisfy the requirements imposed by current Italian regulations. Again in this case, further added layers are required.

Document EP431 574 discloses a metal sheet covered on both surfaces with wood veneers.

Document GB 2 306 389 discloses a pluralities of wood layers formed from medium density woods and one or more metal layers.

Document DE 20 2007 009532 discloses a structure which is formed with an OSB board, between veneer layers made of a wood material.

An object of the present invention is to provide an insulated sandwich panel which eliminates the aforesaid problems, while satisfying regulations.

Another object of the present invention is to provide an insulated sandwich panel with strongly preindustrialized characteristics which is formed offsite and suitable for building constructions of dry type.

These objects are attained according to the present invention by a multilayer insulated sandwich panel according to claim 1.

Further characteristics of the invention are described in the dependent claims.

The characteristics and advantages of the present invention will be apparent from the ensuing detailed description of one embodiment thereof, illustrated by way of non-limiting example in the accompanying drawings, in which:
Figure 1 shows the layerization of a wood fibre insulated sandwich panel - applicable for example as a wall - with a single intermediate plasterboard sheet;
Figure 2 shows the layerization of a wood fibre insulated sandwich panel - applicable for example as a wall - with two plasterboard sheets incorporated into the sandwich, the first being intermediate and the second being positioned adjacent to the internal metal sheet;
Figure 3 shows the layerization of a wood fibre insulated sandwich panel - applicable for example as a wall - with two plasterboard sheets, the first being intermediate and the second being external to the sandwich and facing the building interior;
Figure 4 shows the layerization of a wood fibre insulated sandwich panel - applicable for example as a wall - with an intermediate plasterboard sheet and a fibrous cement sheet external to the sandwich and facing the building interior;
Figure 5 shows the layerization of a wood fibre insulated sandwich panel - applicable for example as a wall - in the version with on-site external cladding finish - with a plasterboard sheet incorporated into the sandwich on the inner side and an OSB/4 panel (or a fibrous cement sheet) on that side to be subsequently finished on site with a wood fibre external cladding;
Figure 6 shows the layerization of a sandwich panel similar to that of Figure 1 but in which one of the two insulating layers (that facing outwards) is mineral wool (or glass fibre) instead of wood fibre;
Figure 7 shows the layerization of a sandwich panel similar to that of Figure 2 but in which one of the two insulating layers (that facing outwards) is mineral wool (or glass fibre) instead of wood fibre;
Figure 8 shows the layerization of a sandwich panel similar to that of Figure 3 but in which one of the two insulating layers (that facing outwards) is mineral wool (or glass fibre) instead of wood fibre;
Figure 9 shows the layerization of a sandwich panel similar to that of Figure 4 but in which one of the two insulating layers (that facing outwards) is mineral wool (or glass fibre) instead of wood fibre;
Figure 10 shows the layerization of a sandwich panel similar to that of Figure 8, but the mirror image thereof about a vertical axis, in which the sound absorption enabled by the mineral wool (or by the glass fibre) acts towards the internal environment;
Figure 11 shows the layerization of a sandwich panel similar to that of Figure 5 but in which the insulating layer facing outwards (with which the on-site external cladding is formed) is mineral wool (or glass fibre) instead of wood fibre;
Figure 12 shows, as a general scheme by way of example, how an insulated sandwich panel of the present invention (here represented in the mixed wood fibre and mineral fibre version with sound absorption on the outer side of the building) can form the intermediate element of a more complex wall: an external ventilation chamber and a backing wall for internally covering the load bearing structures with one or more sheets of plasterboard, are indicated here;
Figure 13 shows the layerization of a sandwich panel insulated with mixed wood fibre and mineral wool (solution in version with sound absorption on the building inner side) but as an example of application as a covering sandwich - with one or two plasterboard sheets;
Figure 14 shows the layerization of a sandwich panel insulated with mixed wood fibre and mineral wool (solution in version with sound absorption on the building outer side) but as an example of application as a covering sandwich - with one or two plasterboard sheets;
Figure 15 shows in qualitative detail the fixing of the panels to the structure of a sandwich panel insulated with wood fibre or with mixed insulation;
Figure 16 is a detailed elevation, for a sandwich panel insulated with wood fibre or with mixed insulation, showing the combining of two panels and the safety connection between the outer and inner metal sheets by means of riveted plates; also showing the seal gasket positioned in the metal sheet coupling grooves;
Figure 17 is a perspective view of a sandwich panel insulated with wood fibre in the version with on-site external finishing cladding and the safety connection between the inner metal sheet and the OSB panel by means of plastic straps;
Figure 18 is a sectional and plan view of a sandwich panel insulated with mixed insulation, showing an outer ventilation chamber and the safety connection between the outer and inner metal sheets of the sandwich by means of a crimped through tube accommodating through threaded bars (qualitative constructional detail);
Figure 19 is a detailed view showing, for complete pre-insulated sandwich panels (Figure 19a) and sandwich panels pre-insulated for cladding (Figure 19b), the fixings on the long side of the panel;
Figure 20 is a detailed view showing, for complete pre-insulated sandwich panels (Figure 20a) and pre-insulated sandwich panels for cladding (Figure 20b), the fixings on the short side of the panel and the starting detail from the ground;
Figure 21 shows, for complete pre-insulated sandwich panels and pre-insulated sandwich panels for cladding, the non-constructional details for edges and corners of buildings;
Figure 22 shows, for a sandwich panel insulated with wood fibre or mixed insulation, a qualitative cross-section in the presence of a fibrous cement sheet fixed directly onto the outer metal sheet of the sandwich panel;
Figure 23 shows, for a sandwich panel insulated with wood fibre or mixed insulation, a qualitative cross-section through the start of the panel at the lowest level (supports) and a qualitative cross-section in the presence of a plasterboard sheet screwed directly onto the inner metal sheet of the sandwich panel.

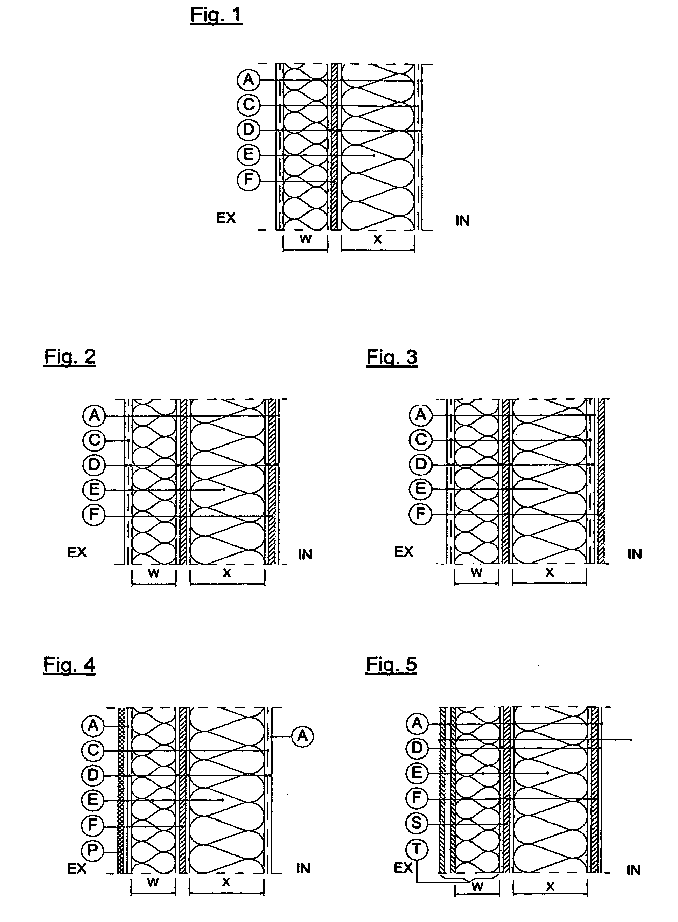

With reference to the accompanying figures, an insulated sandwich panel according to the present invention comprises, in succession starting from the internal side IN, considered as the internal volume of the building, and proceeding to the external side EX, considered as the external environment, a succession of materials identified by the letters ADCDEDFDEDCDA (Figure 1), where A is a non-ribbed, non-perforated metal sheet, C is a web of glass fibre or non-woven fabric (obligatory if perforated metal sheets are used; with non-perforated metal sheets they are required only to satisfy other technological requirements, for example to facilitate adhesion bonding), D is an adhesive spread to make the various components mutually adhesive, E is wood fibre of density 170-190 kg/m³ and bulk thermal capacity of about 2.1 kJ/kg K, f is a plasterboard sheet, typically of 12.5 mm thickness, of density 900 kg/m³ and bulk thermal capacity 0.84 kJ/kg K.

Alternatively, as shown in the figures, panels can be formed having a succession of materials, starting from the internal side IN, identified by the letters ADFDEDFDEDCDA (Figure 2), FADCDEDFDEDCDA (Figure 3), ADCDEDFDEDAP (Figure 4), ADFDESDT (Figure 5).

Where P is a fibrous cement sheet with a skim of finishing plaster, S is an OSB/4 EN300 panel of density 600-680 kg/m³ and variable thickness (> 15 mm), and T is an external cladding system package (insulation + base + mesh + finishing plaster).

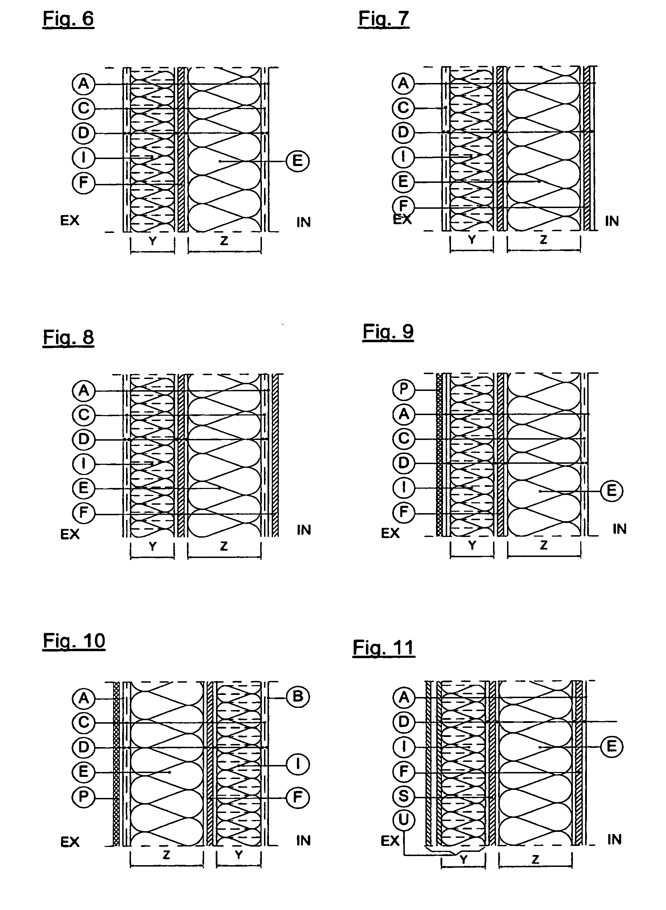

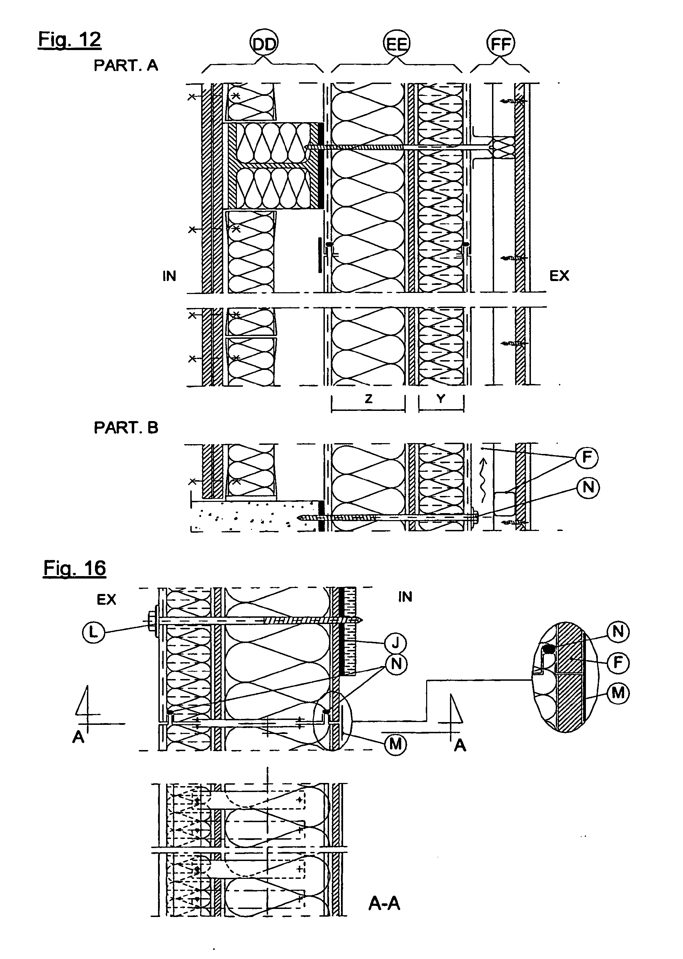

As another alternative, as shown in the figures, panels can be formed having a succession of materials, starting from the internal side IN, identified by the letters ADCDEDFDIDCDA (Figure 6), ADFDEDFDIDCDA (Figure 7), FADCDEDFDIDCDA (Figure 8), ADCDEDFDIDAP (Figure 9), BDCDIDFDEDCDAP (Figure 10), ADFDEDSDU (Figure 11), F(optional)ADCDEDFDIDCDBR (Figure 12). Where B is a non-ribbed, perforated metal sheet, I is an orientated fibre mineral wool, indicative density 100 kg/m³, bulk thermal capacity 0.84 kJ/kg K, (or glass fibre, indicative density > 60 kg/m³) and U is an external cladding system package of mineral wool or glass fibre (insulation + base + mesh + finishing plaster).(insulation + base + mesh + finishing plaster).

The thicknesses of the insulating materials vary depending on the climatic severity: up to 3000 day-degrees the recommended thicknesses are w = 60 mm; x = 100 mm; y = 50 mm; z = 100 mm. For more than 3000 day-degrees the thicknesses are w = 80 mm; x = 120 mm; y = 60 mm; z = 140 mm.

The invention therefore comprises the use in the panel interior of high density wood fibre (WF) as thermal insulation, provided exclusively or only partially in relation to the use for which the panel is intended.

Wood fibre has advantages compared with insulations of the known art as can be seen from Table 1, which compares the basic thermophysical data of four insulating materials.

**Table 1**

| **Insulation** | **Reference density kg/m3** | **Bulk thermal capacity kJ/kg K** | **Thermal conductivity W/m K** | **Compressive stress with 10% prestrain (kPa)** |
|---|---|---|---|---|
| Polyurethane between sealed metal sheets | 35 | 1.3 | 0.024 | > 100 |
| Expanded polystyrene with graphite (Neopor) | 30 | 1.45 | 0.031 | 100 |
| Mineral wool | 100 | 0.84 | 0.042 | > 60 |
| Wood fibre | 180 | 2.10 | 0.044 | 70 |

With reference to a single layer wall with insulation thickness of 0.15 m, the results summarized in Table 2 are obtained.

**Table 2.**

| **Insulation** | **Periodic thermal transmittance YIE W/m2 K** | **Attenuation factor fa** | **Phase shift Φ (h)** | **Sound insulation power index Rw dB** | **Thermal transmittance W/m2 K** |
|---|---|---|---|---|---|
| Polyurethane | 0.1471 | 0.9444 | 2 ore 7min | 26.8 (single layer) | 0.156 |
| Polystyrene. (Neopor) | 0.1831 | 0.9674 | 1 hour 38min | 26.5 (single layer) | 0.199 |
| Mineral wool | 0.2497 | 0.9344 | 2 ore 18min | 30.1 (single layer) | 0.2673 |
| Wood fibre | 0.1362 | 0.4876 | 7 ore 40min | 32.5 (single layer) | 0.2794 |

As can be seen, with wood fibre, for the same thickness the thermal capacity increases substantially and with it the capacity to phase shift the thermal wave during the summer (calculation made according to UNI EN ISO 13786).

Wood fibre has a greater conductivity than the other insulations considered, requiring greater insulation thicknesses for the same thermal insulation. In this respect, at the design stage the choice is to fix a determined thermal transmittance "objective - value" and to calculate at this value the other performance parameters. On this basis the thermal capacity differences are even more evident. Considering an overall sandwich panel thermal transmittance of about 0.26-0.27 W/m²K (value suitable for climatic regions up to 3000 day-degrees and about 20% less than the maximum allowable transmittance in Italy for climatic region E in the year 2010) the values of Table 2 are modified as indicated in Table 3

**Table 3**

| **Insulation** | **Thickness mm** | **Thermal transmittance W/m2 K** | **Periodic thermal transmittance YIE W/m2 K** | **Attenuation factor fa** | **Phase shift Φ (h)** | **Sound insulation power index Rw dB** |
|---|---|---|---|---|---|---|
| Polyurethane | 85 | 0.2694 | 0.2675 | 0.9931 | 0 hrs 46min | 26.0 (single layer) |
| Polystyrene. (Neopor) | 110 | 0.2689 | 0.2661 | 0.9895 | 0 hour 56min | 25.9 (single layer) |
| Mineral wool | 1 | 0.2673 | 0.2497 | 0.9344 | 2 hrs 18min | 30.1 (single layer) |
| Wood fibre | 160 | 0.2627 | 0.1141 | 0.4344 | 8 hrs20min | 32 8 (single layer) |

For cold climates (> 3000 day-degrees) a transmittance of the order of 0.19-0.21 W/m² K is advisable; Table 4 summarizes the new results.

**Table 4**

| **Insulation** | **Thickness mm** | **Thermal transmittance W/m2 K** | **Periodic thermal transmittance YIE W/m2 K** | **Attenuation factor fa** | **Phase Φ shift (h)** | **Sound insulation power index Rw dB** |
|---|---|---|---|---|---|---|
| Polyurethane | 120 | 0.1934 | 0.1887 | 0.9754 | 1 hour 25min | 26.4 (single layer) |
| Polystyrene (Neopor) | 150 | 0.1998 | 0.1931 | 0.9674 | 1 hour 38min | 26.5 (single layer) |
| Mineral wool | 200 | 0.2028 | 0.1687 | 0.8319 | 3 hrs 46min | 31.2 (single layer) |
| Wood fibre | 210 | 0.2023 | 0.0471 | 0.2326 | 11 hrs 43min | 34.1 (single layer) |

In addition, the insertion of one or two suitable bulk boards improves the sandwich acoustic characteristics. Depending on the function performed (including structural load-bearing and surface finish), these bulk boards consist of:
* plasterboard with the aforedescribed characteristics, as intermediate or internally visible finishing layer;
* fibrous cement for externally visible coverings or as support for external cladding formed on site;
* OSB/4 panels (oriented strand board panels are panels of wooden material formed with synthetic resins and with thin veneering), as intermediate support for external cladding formed on site.

The use of two bulk boards enables a double wall to be formed having strongly industrialized characteristics and enables the sound insulation power Rw of the sandwich panel to be increased to values such as to satisfy the minimum values of the standardized façade sound insulation index for Italy as prescribed in D.P.C.M.5 of December 1997 - provided that windows of suitable acoustic performance are present - without the need for further additional layering. As the requirement imposed by D.P.C.M.5 of December 1997 refers to the entire wall, complete with windows and the ratio between the opaque surface and glazed surface of the façade is variable, the minimum window requirements in relation to the prefixed requirements of the opaque element must be calculated each time.

The insulation thicknesses separated by the central bulk board can be differentiated and optimized in relation to the frequency response (for Rw) required at the design stage.

This description provides various constructional versions. The first version (basic execution represented in Figure 1) comprises a single plasterboard bulk board placed in an intermediate position.

The second version comprises the addition of a second plasterboard bulk board to the interior of the sandwich panel adjacent to the internal metal sheet (Figure 2); the board can also be external to the sandwich panel, i.e. screwed directly onto the metal sheet on the interior side IN of the building, where it can be plastered and painted; in this case suitable gaps must be left to compensate for the thermal expansion of the plasterboard against the support (Figure 3).

In the third version the second board, of fibrous cement and complete with the plastering and smooth finish skimming (for example Aquapanel^{R} of the firm Knauf) is directly screwed onto the external metal sheet of the panel; in this manner the external appearance is similar to a normal plastered wall; at a maximum of every 7.20 metres suitable gaps must be left to compensate for expansion of the support on which the sheets are screwed (Figure 4).

In the fourth version, suitable only for panels for wall use, the sandwich panel can be formed, following the logic described in the first and second version, only for that portion adjacent to the internal rooms (i.e. metal sheet with possible plasterboard, insulation of wood fibre and intermediate bulk board as described hereinafter), while the most external part can be in the form of external insulation cladding formed on site. To enable the external cladding to properly adhere to the base, the intermediate bulk board is not plasterboard but a load-bearing oriented strand board (OSB) panel suitable for moist environments class 4 EN300, density exceeding 600 kg/m³ and thickness sufficient to ensure adequate mechanical strength during use (indicatively at least 15 mm). Alternatively (more costly), a fibrous cement board as aforedescribed can be used. This version in fact lacks the external metal sheet of the sandwich panel which provides mechanical strength. The advantage of this fourth version is being able to complete the sandwich panel with external insulation cladding and a visible external finish in the versions commonly used in traditional building work (brick or concrete). From the appearance aspect the final building product is hence virtually indistinguishable from a building of traditional construction (Figures 5 and 11). The external finishing cladding, which is not an aspect of the present invention, is advisably wood fibre or mineral wool with the thicknesses indicated for the single-block solution (respectively dimensions "w" for wood fibre and "y" for mineral wool or glass fibre).

An evaluation of the sound insulation power of the sandwich panel or of the sandwich panel plus external finishing cladding, in its various versions, can be determined by suitable laboratory tests.

With the insertion of a single bulk board a prudential estimate leads to estimated sound insulation values at least 10 dB greater than those calculated for the corresponding single-layer wall and hence presumably an Rw value of the order of 43-44 dB. Inserting two bulk boards does not substantially vary the thermal and phase shift results, but gives a further improvement in sound insulation power. In this respect the sandwich panel in the calculation can be likened to a double plasterboard wall with single boards, with estimated performance greater than 55 dB, as in Table 5. In the theoretical calculations, the sound insulation values were determined ignoring the acoustic attenuation of the internal and external metal sheets (or the finishing plaster in the case of external cladding) and of the insulation layer between the metal sheet located towards the outside and the central plaster board.

**Table 5**

| **Layerization** | **Thickn. mm** | **Weight kg/m2 (#)** | **Therm transmittanza W/m2 K YIE** | **Pdic. therm. transm. YIE W/m2 K** | **Atten. factor fa** | **Phase shift Φ (h)** | **Sound ins. power index Rw dB** |
|---|---|---|---|---|---|---|---|
| WF 60 + PB12.5 + WF 100 | 172.5 | 47.85 | 0.2587 | 0.0893 | 0.34519 | 15' hrs | >43 (est) |
| MW 50 + PB12.5 + WF 100 | 162.5 | 42.05 | 0.2708 | 0.1200 | 0.44337 | 28' hrs | >43 (est) |
| WF 80 + PB12.5 + WF 120 | 212.5 | 55.05 | 0.2094 | 0.0438 | 0.209011 | 53' hrs | >44 (est) |
| MW 60 + PB12.5 + WF 140 | 212.5 | 50.25 | 0.2066 | 0.0514 | 0.248910 | 28' hrs | >44 (est) |
| WF60 + PB12.5 +WF100+PB12.5 | 485 | 59.10 | 0.2547 | 0.0841 | 0.33009 | 44' hrs | 60.4 (§) |
| MW50 + PB12,5 +WF100+PB12,5 | 175 | 53,30 | 0,2665 | 0,1130 | 0,42417 | 58' hrs | 59,5 (§) |
| WF80 + PB12,5 +WF120+PB12,5 | 225 | 66,30 | 0,2068 | 0,0412 | 0,199312 | 23' hrs | 64,2 (§) |
| MW60 + PB12,5 +WF140+PB12,5 | 225 | 61,50 | 0,2041 | 0,0484 | 0,237210 | 58' hrs | 66,2 (§) |

| | | | | | | | |
|---|---|---|---|---|---|---|---|
| Where: WF = wood fibre PB = plaster board MW = mineral wool Number = thickness in mm (§) sound insulation power calculation by formula for plasterboard walls with two simple boards. | | | | | | | |

In the aforegoing descriptions the exclusive use of wood fibre is proposed as insulation: this is the first variant.

As an alternative, the sandwich panel insulation can comprise two different materials: wood fibre (WRF), generally on the internal side IN, and oriented fibre mineral wool of about 100 kg/m³ density (MW) (or glass fibre, indicative density > 60 kh/m³) positioned generally on the external side. With a suitable wood fibre thickness a periodic thermal transmittance can be achieved which satisfies the prescribed minimum requirements without further additional layers. The conceptual validity of the four previously described versions remains unchanged. The acoustic sound absorbency effect is enhanced by using a perforated metal sheet positioned adjacent to the mineral wool. In this case the metal sheet is normally of increased thickness - normally at least 0.8 mm if of steel - to ensure the required mechanical strength. The recommended perforation percentage is around 40% (hole 4 mm, pitch 6 mm).

In relation to the position of the perforated metal sheet, two cases can arise.

For applications in an industrial productive environment with low internal steam production, the sandwich panel is used by facing the mineral wool and sheet metal towards the internal facade to achieve acoustic correction of a noisy environment (Figure 10).

In other cases, for eminently aesthetic-functional reasons, a ventilated facade can be required positioned external to the sandwich panel. Independently of how said ventilated facade is made, and of how it is rigidly fixed to the rear load-bearing structures, it maintains the wall in shadow and hence reduces the needs related to hourly phase shift. Use of the sandwich panel with mineral wool adjacent to the outwardly facing perforated metal sheet, i.e. facing the ventilation chamber (where the perforated metal sheet is in any event protected from atmospheric agents) creates a Helmholtz resonator: the sound wave originating from the outside is absorbed over a wide frequency range before it reaches the further layers, so further improving overall acoustic performance. The cross-section is shown in Figure 12, where FF represents, with purely qualitative graphical representation, a generic ventilated façade, not an inventive aspect, (here represented as a plastered fibrous cement board with wooden slat support structure), EE is the generic sandwich panel of the invention with mixed wood fibre - mineral wool insulation, and DD represents, with purely qualitative graphical representation, an internal backing wall covering the load-bearing building structures and supporting service installations, this also not being an aspect of the invention.

The proposed solution can also be applied to sandwich panels suitable for laying on the building roof.

These panels are characterised by a ribbed metal sheet of 2, 3, 4 or more ribs on the extrados; the ribs are generally between 30 and 40 mm in height.

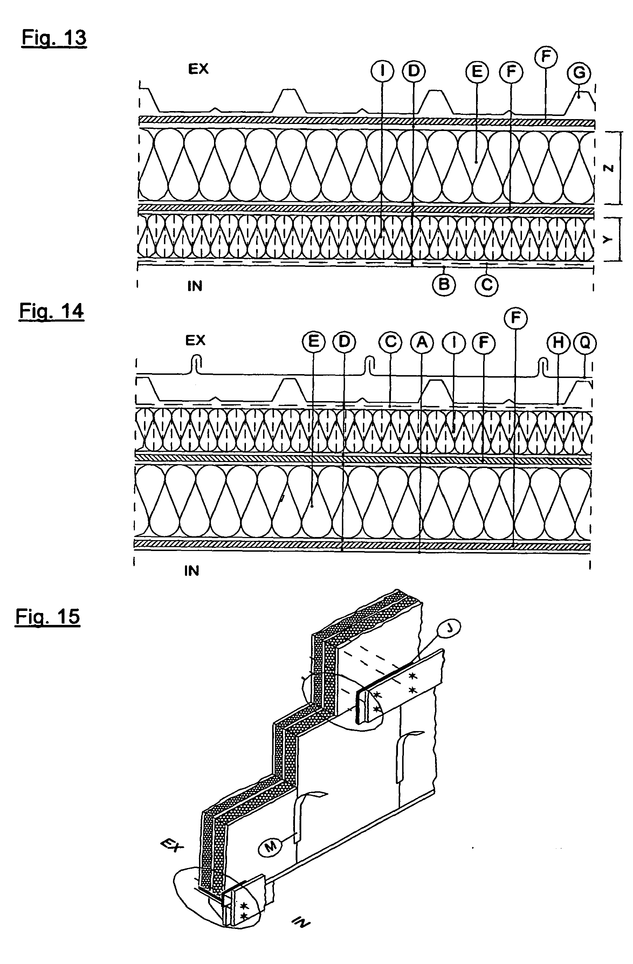

In relation to that stated, generally in industrial environments the perforated metal sheet normally faces the building interior to contribute to absorption of the sound energy produced within the building, as acoustic correction for noisy rooms, Figure 13, there being a succession of layers starting from the interior side IN, i.e. from the bottom in the figure, BDCDIDFDEDF(optional)G, G being a non-perforated ribbed metal sheet.

However (Figure 14) the layerization can also comprise externally facing mineral wool: the external ribbed metal sheet can also be perforated (best on the sides of the ribs) if further roofing elements and pitch ventilation are provided which ensure the indispensable impermeability characteristics (including a second safety mantle. In this case, there is a succession of layers starting from the internal side IN, i.e. from the bottom in Figure 14, ADF(optional)DEDFDIDCDHQ, where H is a perforated ribbed metal sheet, and Q is a covering element for the ventilated roof, including the safety mantle.

In order to also satisfy the most critical cases, the production must enable panels to be formed having a total thickness up to 0.25 m.

Mutual adhesion of the various components is achieved with suitable adhesives (vinyl adhesives being already used) and with final pressing under load (hot, if necessary). This bonding may not be sufficient to prevent separation of the various layers during panel movement, hence the following further action is taken.

Sandwich panel with metal sheets on both sides, fagade not of ventilated type: small plates must be positioned on the long sides and riveted along the edges of the sandwich panel containing sheets at a maximum indicative pitch of 1.5 m; the plates must pass along the inside of the edges and be suitably offset on the opposite sides such as to avoid overlapping, as shown in Figure 16, where L are self-tapping or self-perforating screws, dimensioned according to static requirements, J is a strip of recycled granular rubber agglomerate, minimum thickness 4 mm, 800 kg/m³, N are gaskets between the external and internal metal sheet joining profiles, M is an aluminized self-adhesive strip acting as an air-tight vapour barrier.

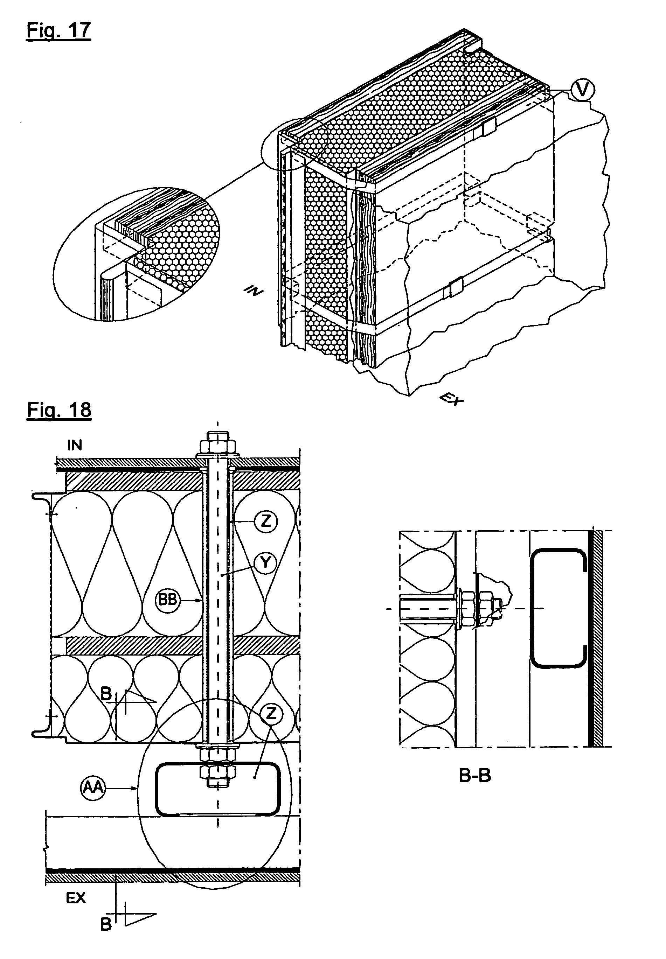

Sandwich panel suitable for finishing with external cladding laid on site: lacking the metal sheet on the external side, replaced by the OSB panel, the assembly is held together by plastic straps embedded in the adhesive between the interior facing metal sheet and the adjacent plasterboard (or the wood fibre insulation adjacent to the metal sheet if the plasterboard is lacking), then tightened and secured on the side with OSB/4 of the sandwich panel; at least one strap every 50 cm, as shown in Figure 17; where V is a plastic strap (minimum width 8 mm, pitch 50 cm) for sandwich containment, X (circled) is a low density wood fibre strip 3 mm thick, or felt 2 mm thick, Y (circled) is a threaded bar for structurally fixing the ventilated façade and the sandwich panel, Z (circled) is an expanding foam filing the free space between the bar and rigid tube, AA is a support structure for the ventilated face (indicative representation), BB is a rigid tube crimped at its ends or equivalent technical solution.

Sandwich panel with metal sheet on both sides for which an external ventilated façade is to be formed: the façade fixing system must be able to discharge the mechanical wind forces directly onto the internal load-bearing structure, without subjecting the sandwich panel to direct mechanical actions; for this purpose, through threaded tie bars must be used which firstly fix the sandwich panel to the structure and then enable the ventilated façade support structure to be coupled. In the sandwich panels, to facilitate tie bar passage, metal tubes can be arranged during production, crimped at their two ends. During sandwich panel transport, straps or metal cables can be passed through the tubes, to be cut at the moment of fixing. The residual space between the tube and tie bar must be filled with foam. A purely qualitative non-constructional representation of the fixing system is shown in Figure 18.

Where perforated metal sheets facing mineral wool are provided, a glass web (or unwoven fabric) must be interposed between the metal sheet and insulation to prevent the fibres losing dust in the external air. This may also be necessary if perforated metal sheets are not present, if this improves adhesion between the insulation and the metal sheets.

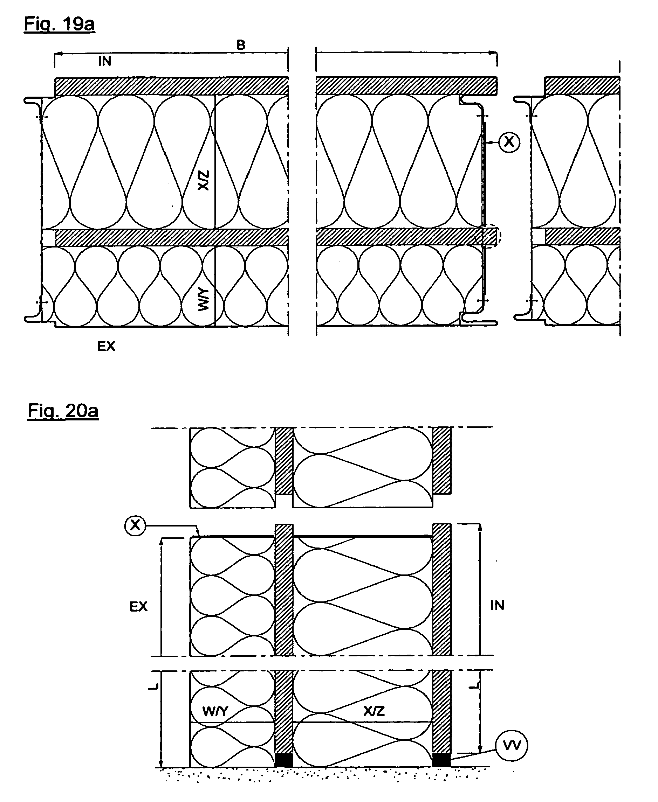

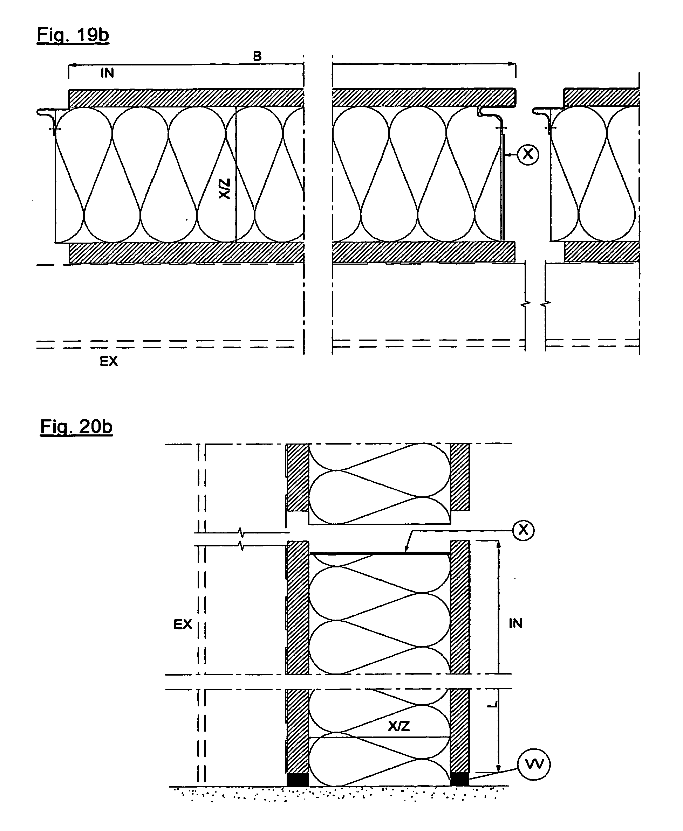

To enable optimal fixing of the sandwich panels, both laterally and longitudinally, the plasterboard sheets or OSBs incorporated in the sandwich panel must be offset by about 10-15 mm both in the direction of the panel long side and in the direction of the short side as shown in Figures 18 and 20. The only exception is for the externally facing metal sheet, which must not extend beyond the underlying insulating panel (whether of wood fibre or of mineral wool): this is to prevent damage to the metal ends during transport of the finished panel and the presence of sharp projecting edges (the bare edge of the metal sheet). The lowest sandwich panel laid vertically on the support base, as described later under the laying conditions, has to be laid on a wood or hard rubber strip (e.g. neoprene) (item VV) at the fixing groove of rigid boards, in order not to subject the insulation to shear stresses (Figures 20a and 20b). At the start of the first panel from the lower rigid support base, this latter must be suitably impermeabilized to prevent moisture rising from the ground towards the sandwich panel (O is a support profile for the panels or the starting wall for the sandwich panel).

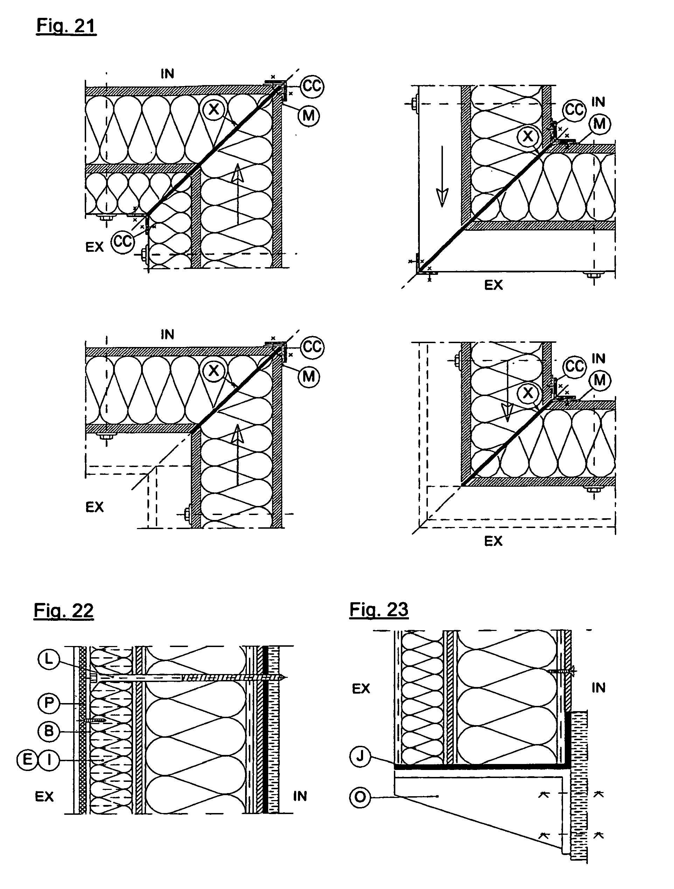

Internal and external edge joints between wall panels: the sandwich panels must bed cut angle4d along the bisector of the angle of incidence and then place together, interposing a thin layer of low density (30 kg/m³) wood fibre (thickness 2-3 mm) or felt from recycled fabrics (thickness 1-2 mm). The joint between internal metal sheets must always be sealed with aluminized tape and then finished with an angular profile. The angular profile must also be placed towards the exterior if the metal sheet is exposed. In the case of a sandwich panel with a finishing external cladding formed on site, the instructions of the cladding system supplier must always be respected (Figure 21); where CC is an "L" profile for closing the edge or corner joint, and M is an aluminized self-adhesive strip acting as an air-tight vapour barrier.

Angle elements with particular aesthetic characteristics can also be designed; however constructed, they must not reduce sound insulation and thermal shift performance or create points of air sealing defect in the structure or discontinuities in the vapour barrier.

They must be laid on site such as to prevent direct contact between the internal metal sheet and the building structural parts, by interposing structural decoupling elements (strips) of elastic type but with sufficiently high rigidity to prevent creep phenomena under load (see item J). It is considered suitable to use strips of recycled granular rubber agglomerate (normally used below brick partitions), minimum thickness 4 mm. The strip is firstly adhesion bonded to the resting and/or contact points on the structural support, then the sandwich panel is fixed (see Figures 15 and 16).

If the internal metal sheet of the sandwich panel is not left exposed, an adhesive aluminized strip must be superposed on the joints between adjacent and consecutive panels (see item M) to ensure continuity of the vapour barrier formed by the internally facing metal sheet, also at the joint between the sheets, and ensure reliable air tightness of the building even under high differential pressures due to wind action (see Figures 15 and 16).

This requirement is not necessary where sandwich panels with perforated internal sheets are to be used.

To ensure sealing between adjacent or consecutive sandwich panels in relation to the profile of the metal panel, seal gaskets must be laid on the base of the connection grooves between adjacent metal panels (see Figure 16).

While fitting the panels together, to compensate for normal working tolerances at the contacting surfaces between the various sandwich panels, a thin layer of low density (30 kg/m³) wood fibre (thickness 2-3 mm) or felt from recycled fabrics (thickness 1-2 mm) must be inserted at wood fibre insulating panels such as to ensure proper fibre copenetration and elimination of gaps due to constructional tolerances. To fit together panel sheets (which are rigid), suitable constructional arrangements must be evaluated at the design stage. This constructional system is in any event insensitive to acoustic flanking phenomena (see Figures 19, 20, 21).

In the cases described in Figures 4 and 9, to fix the sandwich panel self-perforating flared socket head screws must be used to ensure a flat external surface, suitable for subsequent fitting of the fibrous cement board with corrosion-proof screws (Figure 22). If laying a plasterboard sheet on the internal side IN, without interspace, this is fixed like the aforedescribed fibrous cement board, using corrosion-proof screws, then puttied, skimmed and painted (Figure 23). If necessary, masks can be left at the upper and lower corners to compensate small structural movements without creating visible gaps. The sandwich panel of the present invention has a weight per m² variable between 42 and 66 kg/m². For this reason its handling and installation require special arrangements compared with traditional sandwich panels. For optimizing the available dimensions of plasterboard, fibrous cement and OSB panels to avoid material wastage, it is advisable to provide a nominal standard sandwich panel width of 0.60 m, which differs from the current commercial standard (1.0 m). With regard to length, the use of sandwich panels of length less than 4.0 m is advised (one panel per storey for residential or office use). However the construction of panels of greater length is technically possible.

Producing holes in the sandwich panel for forming apertures and windows can be done on site by cutting the panel. As far as possible, the architectural design should favour multiple window dimensions and positions which coincide with the sandwich panel width, to avoid cutting the panels laterally (if these are positioned vertically) or upperly and lowerly (if these are positioned horizontally), by simply interruption their installation where the window is required, with consequent considerable reduction in waste.

In Italy, climatic zones are classified on the basis of day-degrees by Republic Presidential decree No. 412 of 1993. Six climatic zones are defined from A to F.

The basic panel, with insulation thickness 60-100 mm (50-100 mm in the case of the mixed insulation solution), is designed to satisfy the typical requirements of a fresh temperate climate, with a number of day-degrees between 1400 and 3000 (climatic zones D and E).

The use of the sandwich panel for cold climates (day-degrees exceeding 3000, climatic zone F) advises the insulation material thickness to be increased such as to achieve a transmittance of the order of 0.20 W/m² K, indicatively with 80-120 mm of wood fibre (or 60-140 mm in the mixed insulation solution). In this case it is always advisable to make a previous thermohygrometric verification (Glaser diagram to EN ISO 13788) which could advise the formation of certain holes in the external metal sheet (possibly in hidden positions) to improve outward migration of the little vapour which might accidentally succeed in passing through the metal sheet positioned on the inner side of the sandwich panel.

The solution with external insulation cladding formed on site does not usually require particular thermohygrometric verifications.

The use of sandwich panels for hot temperate climates (climatic zones A, B and C, day-degrees from 600 to 1400) could enable a thermal insulation thickness reduction. However this solution, although possible, is not advisable as at the same time it reduces the thermal capacity and hence periodic thermal transmittance, precisely where the thermal wave phase shift is most required. A thickness reduction could be proposed only if a combination with further internal and/or external layers is proposed.

The use of the sandwich panel with internally facing perforated metal sheet (Figures 10 and 13) is subject to possible interstitial condensation problems when the panel is used to close rooms with internal steam production. In this case the client must previously communicate said special conditions to allow the necessary thermohygrometric verifications.

If the sandwich panel is used in roofing (see Figures 13 and 14), the conditions prescribed for optimal water disposal (minimum slope - normally > 7%, clinching, etc.) in accordance with the instructions of the supplier of the ribbed sheet positioned on the extrados. External ribbed sheet can be formed in such a manner as to house active energy elements (for example amorphous photovoltaic panels fixed onto the sheet).

The panel is fixed to the building structure (normally structural steelwork) by the methods already used for normal sandwich panels (self-threading or self-perforating screws onto the primary or secondary structure). The type, the positioning of the fixings and their number must be dimensioned by the user in relation to the constructional characteristics of the sheet metal used and the static load stresses (own weight and accidental loads, these being a function of the wind zones imposed by structural regulations).

Installation methods must be designed such that the panel firstly rests on a base which discharges its weight onto the support structure, after which mechanical fixing is carried out (Figure 23). The support base can also be of masonry elements (reinforced concrete, brick). To limit thermal bridges, the use of cellular concrete (for example Gasbeton^{R}. Ytong^{R}) is advised, with a density suitable for the static load and thickness such as to ensure adequate thermal insulation. Particular constructional details must be studied such as to ensure that the insulating panel is in a position not accessible to rain water in the case of heavy rain (plinth of height more than 20 cm).

When the building is no longer in use the panel can be removed and largely reused for other constructions, eliminating the need for its disposal. The only point to note is that in this case the reuse should be limited to constructions in which the panel no longer remains exposed, as the metal sheets could be partly damaged during removal of the original self-perforating fixing screws. The original holes, if no longer used, must be filled with polyurethane foam and the holes in the sheet metal positioned on the hot side (internal) must be closed by taping with adhesive aluminium sheets before subsequent reassembly.

In any event, differential separation of the constructional elements is possible at the end of their life cycle (metal sheets, insulation, plasterboard, OSB panel).

For the solution with external finishing cladding formed on site, when the building is no longer used the mineral surface plaster is not reusable and must be disposed of as an inert. The insulation panels of the cladding can also not be reused and must be disposed of. The wood fibre insulation of the cladding could be used for thermal upgrading.

The wood fibre insulation (WF) is generally of flame-reactive class E in accordance with European regulations, hence combustible. However its position in the interior of a sandwich panel with sealed metal sheets makes it difficult for oxygen to flow in as fuel. The further presence of a plasterboard on that side exposed to the flame (normally the interior side) further improves performance.

The present invention ensures considerable advantages, described below.

Improved thermal phase shift performance during summer. Improved sound insulation and sound absorption performance. Pre-industrialized construction component with controlled production quality. Complete construction component with very rapid installation, of type well known to who has already installed sandwich panels. Suitable for the construction of well insulated or hyper-insulated light buildings. Natural insulation materials: the wood fibre and OSB panels are obtained from the less valuable fractions of wooden material, not otherwise usable. Absence of fibre dispersion. Condensation point safety, including if internal backing walls are present. Sandwich panel reusable for other constructions at the end of its life. Sandwich suitable for manual panel production processes: the represents a higher-earning "plus" for firms which produce manually, hence compensating for economies of scale consequent on the lack of continuous production. Except for those cases with perforated internal metal sheet (normally in the production environment), no release of solvents or vapours is possible towards internal environments. In the solution with finishing external cladding, the final building product is indistinguishable from constructions executed in traditional manner, with possible positive market acceptance implications and the use of a finishing technology which is known, experimented and with standardized specifications.

## Claims

1. A multilayer insulated sandwich panel **characterised by** comprising in succession starting from the internal side (IN), considered as the internal volume of the building, and proceeding to the external side (EX), considered as the external environment, a succession of materials: a first metal sheet (A); a first wood fibre (E) insulation layer associated with said first metal sheet (A), having an density of 170-190 kg/m³, and a thickness greater than or equal to 100 mm; a layer (F) of plasterboard associated to said a first wood fibre (E) insulation layer, with an indicative density of about 900 kg/m³ and a thickness equal to or greater than 12.5 mm.

2. A panel as claimed In claim 1, **characterised by** comprising a second wood fibre (E) layer insulation positioned on the other side of the bulk layer (F) respect with said first wood fibre (E) Insulation layer.

3. A panel as claimed In claim 1, **characterised by** comprising a second layer of mineral wool (I) with oriented fibres or of glass fibre also positioned on the other side of the bulk layer (F) respect with said first wood fibre (E) insulation layer.

4. A panel as claimed in claim 2, **characterised in that** the second wood fibre layer (E) has a thickness greater than or equal to 60 mm.

5. A panel as claimed in claim 3, **characterised in that** the mineral wool (U) or glass fibre (U) insulating layer has a thickness greater than or equal to 50 mm.

6. A panel as claimed in claim 2 or 3, **characterised in that** said multilayer panel comprises a second metal containment sheet (A) associated with said second layer insulation.

7. A panel as claimed in claim 6, **characterised in that** a plasterboard sheet (F) is interposed between the first metal sheet (A) and the first wood fibre (E) insulation layer or screwed directly onto the metal sheet on the interior side.

8. A panel as claimed in claim 7, **characterised in that** the second metal sheet (A) positioned on the external side, is of ribbed type, and said panel being used as an inclined roofing element.

9. A panel as claimed in claim 8, **characterised in that** the ribbed second metal sheet positioned on the extrados is covered by a safety layer to hence create an interspace enabling ventilation of the roof.

10. A panel as claimed in any of the previous claims, **characterised in that** the various layers are connected together with adhesives.

11. A panel as claimed in any of the previous claims, **characterised by** comprising a web (C) of glass fibre or non-woven fabric between said second metal sheet (A) and said external insulation layer.

## Patentansprüche

1. Mehrschichtige isolierte Sandwichplatte, **dadurch gekennzeichnet, dass** sie der Reihe nach, beginnend bei der Innenseite (IN), die als das Innenvolumen des Gebäudes betrachtet wird, bis zur Außenseite (EX), die als die äußere Umgebung betrachtet wird, eine Abfolge von Materialien aufweist: ein erstes Metallblech (A); eine erste Isolationsschicht aus Holzfasern (E), die mit dem ersten Metallblech (A) in Beziehung steht, mit einer Dichte von 170-190 kg/m³ und einer Dicke, die größer oder gleich 100 mm ist; einer Gipsplatten-Schicht (F), die mit der einen ersten Isolationsschicht aus Holzfasern (E) in Beziehung steht, eine indikative Dichte von etwa 900 kg/m³ und einer Dicke von gleich oder größer als 12,5 mm hat.

2. Platte nach Anspruch 1, **dadurch gekennzeichnet, dass** sie eine zweite Isolationsschicht aus Holzfasern (E) aufweist, die an der anderen Seite der Bulk-Schicht (F) relativ zur ersten Isolationsschicht aus Holzfasern (E) angeordnet ist.

3. Platte nach Anspruch 1, **dadurch gekennzeichnet, dass** sie eine zweite Schicht aus Mineralwolle (I) mit orientierten Fasern oder aus Glasfasern aufweist, die ebenfalls an der anderen Seite der Bulk-Schicht (F) relativ zur ersten Isolationsschicht aus Holzfasern (E) angeordnet ist.

4. Platte nach Anspruch 2, **dadurch gekennzeichnet, dass** die zweite Schicht aus Holzfasern (E) eine Dicke von größer oder gleich 60 mm hat.

5. Platte nach Anspruch 3, **dadurch gekennzeichnet, dass** die Isolationsschickt aus Mineralwolle (U) oder Glasfaser (U) ein Dicke von größer oder gleich 50 mm hat.

6. Platte nach Anspruch 2 oder 3, **dadurch gekennzeichnet, dass** die mehrschichtige Platte ein zweites Sicherheits-Metallblech (A) aufweist, das mit der zweiten Isolationsschicht in Beziehung steht.

7. Platte nach Anspruch 6, **dadurch gekennzeichnet, dass** eine Gipskartonplatte (F) zwischen dem ersten Metallblech (A) und der ersten Isolationsschicht aus Holzfasern (E) angeordnet ist oder direkt an das Metallblech an der Innenseite angeschraubt ist.

8. Platte nach Anspruch 7, **dadurch gekennzeichnet, dass** das zweite Metallblech (A), das an der Außenseite angeordnet ist, vom gerippten Typ ist, und dass die Platte als eine geneigte Dachelement verwendet wird.

9. Platte nach Anspruch 8, **dadurch gekennzeichnet, dass** das gerippte zweite Metallblech, das an der Krümmungsaußenseite angeordnet ist, positioniert ist, von einer Sicherheitsschicht überdeckt ist, um dadurch einen Zwischenraum zu erzeugen, durch den eine Belüftung des Daches erreicht wird.

10. Platte nach einem der vorhergehenden Ansprüche, **dadurch gekennzeichnet, dass** die verschiedenen Schichten durch Klebstoff miteinander verbunden sind.

11. Platte nach einem der vorhergehenden Ansprüche, **gekennzeichnet durch** eine Bahn (C) aus Glasfasern oder aus einem Fliesstoff zwischen dem zweiten Metallblech (A) und der äußeren Isolationsschicht.

## Revendications

1. Panneau sandwich isolé à couches multiples, **caractérisé en ce qu'**il comprend, en succession, en commençant à partir du côté interne (IN), considéré comme le volume interne du bâtiment, et en continuant vers le côté externe (EX), considéré comme l'environnement externe, une succession de matériaux : une première feuille métallique (A) ; une première couche d'isolation en fibre de bois (E) associée à ladite première feuille métallique (A), possédant une densité de 170 à 190 kg/m³, et une épaisseur supérieure ou égale à 100 mm ; une couche (F) en plaque de plâtre associée à ladite première couche d'isolation en fibre de bois (E), avec une densité indicative d'environ 900 kg/m³ et une épaisseur égale ou supérieure à 12,5 mm.

2. Panneau selon la revendication 1, **caractérisé en ce qu'**il comprend une seconde couche d'isolation en fibre de bois (E) positionnée sur l'autre côté de la couche massive (F) par rapport à ladite première couche d'isolation en fibre de bois (E).

3. Panneau selon la revendication 1, **caractérisé en ce qu'**il comprend une seconde couche en laine minérale (I) avec des fibres orientées ou en fibre de verre également positionnée sur l'autre côté de la couche massive (F) par rapport à ladite première couche d'isolation en fibre de bois (E).

4. Panneau selon la revendication 2, **caractérisé en ce que** la seconde couche en fibre de bois (E) possède une épaisseur supérieure ou égale à 60 mm.

5. Panneau selon la revendication 3, **caractérisé en ce que** la couche d'isolation en laine minérale (U) ou en fibre de verre (U) présente une épaisseur supérieure ou égale à 50 mm.

6. Panneau selon la revendication 2 ou 3, **caractérisé en ce que** ledit panneau à couches multiples comprend une seconde feuille de confinement métallique (A) associée à ladite seconde couche d'isolation.

7. Panneau selon la revendication 6, **caractérisé en ce qu'**une feuille de plaque de plâtre (F) est interposée entre la première feuille métallique (A) et la première couche d'isolation en fibre de bois (E) ou vissée directement sur la feuille métallique sur le côté intérieur.

8. Panneau selon la revendication 7, **caractérisé en ce que** la seconde feuille métallique (A), positionnée sur le côté externe, est de type nervuré, ledit panneau étant utilisé en tant qu'élément de toiture incliné.

9. Panneau selon la revendication 8, **caractérisé en ce que** la seconde feuille métallique nervurée positionnée sur l'extrados est couverte par une couche de sécurité pour ainsi créer un espace intermédiaire permettant la ventilation du toit.

10. Panneau selon l'une quelconque des revendications précédentes, **caractérisé en ce que** les diverses couches sont reliées les unes aux autres avec des adhésifs.

11. Panneau selon l'une quelconque des revendications précédentes, **caractérisé en ce qu'**il comprend une âme (C) en fibre de verre ou en tissu non tissé entre ladite seconde feuille métallique (A) et ladite couche d'isolation externe.
